Europäisches Patentamt

European Patent Office

Office européen des brevets

(19)

(11) Veröffentlichungsnummer: **0 141 161**
A2

(12) **EUROPÄISCHE PATENTANMELDUNG**

(21) Anmeldenummer: **84110634.7**

(22) Anmeldetag: **06.09.84**

(51) Int. Cl.⁴: **G 06 F 11/00**

(30) Priorität: **09.09.83 DE 3332626**

(43) Veröffentlichungstag der Anmeldung:
**15.05.85 Patentblatt 85/20**

(84) Benannte Vertragsstaaten:
**AT BE CH DE FR GB IT LI NL SE**

(71) Anmelder: **Siemens Aktiengesellschaft**
**Berlin und München Wittelsbacherplatz 2**
**D-8000 München 2(DE)**

(72) Erfinder: **Tschöpe, Norbert, Ing. grad.**
**Badstrasse 1**
**D-8000 München 70(DE)**

(54) Schaltungsanordnung zum Erkennen von statischen und dynamischen Fehlern in Schaltungsbaugruppen.

(57) Eine mit einer Anzahl von Schaltungsbaugruppen (SBG) verbundene Zentralsteuereinheit (MPB) weist zwei Unterbrechungseingänge (INTn, INTn+1) auf. Von diesen Unterbrechungseingängen ist im fehlerfreien Zustand der Schaltungsbaugruppen zunächst nur der mit der niedrigeren Unterbrechungspriorität aktiviert. Es ist ein Register (Reg) vorgesehen, in welches bei Ansteurung der Schaltungsbaugruppen von der Zentralsteuereinheit her Angaben bezüglich der jeweils gerade angesteuerten Schaltungsbaugruppe einschreibbar sind. Außerdem ist mindestens eine Fehlererkennungsschaltung vorgesehen, die bei Vorhandensein eines Fehlers in der jeweiligen Schaltungsbaugruppe auf deren Ansteuerung hin ein Fehlersignal abgibt. Mit den genannten Unterbrechungseingängen ist eine Steuereinrichtung (FF) verbunden, die auf ein solches Fehlersignal hin über den aktivierten Unterbrechungseingang den Ablauf einer ersten Unterbrechungsroutine bewirkt, in deren Verlauf der die höhere Unterbrechungsriorität aufweisende Unterbrechungseingang aktiviert wird. Vor Beendigung der gerade ablaufenden Unterbrechungsroutine wird die durch die Angaben in dem Register bezeichnete Schaltungsbaugruppe erneut angesteuert. Tritt dabei erneut ein Fehlersignal auf, so bewirkt die Steuereinrichtung über den gerade aktivierten Unterbrechungseingang den Ablauf einer weiteren Unterbrechungsroutine.

FIG 1

SIEMENS AKTIENGESELLSCHAFT
Berlin und München

Unser Zeichen
VPA 83 P 1 6 6 1 E

Schaltungsanordnung zum Erkennen von statischen und dyna- mischen Fehlern in Schaltungsbaugruppen

Die Erfindung betrifft eine Schaltungsanordnung zum Erkennen von in Schaltungsbaugruppen auftretenden und von diesen durch Abgabe jeweils eines Fehlersignals angezeigten, über eine vorgegebene erste Zeitspanne hinweg vorliegenden statischen Fehlern bzw. eine vorgegebene zweite Zeitspanne nicht überschreitenden dynamischen Fehlern in einer mit diesen Schaltungsbaugruppen verbundenen und diese für eine Abgabe von Datensignalen ansteuernden Zentralsteuereinheit, insbesondere in einer Mikroprozessorbaugruppe.

Wird in einer aus einer Zentralsteuereinheit und einer Vielzahl von mit dieser verbundenen Schaltungsbaugruppen bestehenden Schaltungsanordnung die bei Auftreten von Fehlern erforderliche Fehlerbehandlung in der Zentralsteuereinheit durchgeführt, so ist es für eine effektive Fehlerbehandlung vorteilhaft, wenn in der Zentralsteuereinheit bei Auftreten von Fehlern in den Schaltungsbaugruppen zwischen statischen und dynamischen Fehlern unterschieden werden kann. Je nachdem welche Art von Fehlern vorliegt, sind im allgemeinen von der Zentralsteuereinheit her für die Fehlerbehandlung unterschiedliche Maßnahmen einzuleiten. Das Vorliegen eines statischen Fehlers in einer der Schaltungsbaugruppen kann beispielsweise dazu führen, daß von der Zentralsteuereinheit diese fehlerhafte Schaltungsbaugruppe außer Betrieb genommen wird, während in den übrigen fehlerfreien Schaltungsbaugruppen der Betrieb unverändert aufrechterhalten wird. Bei Vorliegen eines dynamischen Fehlers kann dagegen zunächst eine statistische Feh-

Kzr 1 Gru / 23.08.1983

lerbewertung durchgeführt werden. Je nach Ergebnis dieser Bewertung sind dann von der Zentralsteuereinheit entsprechende Maßnahmen zur Behebung des Fehlers einzuleiten. Diese können wieder darin bestehen, daß die fehlerbehaftete Schaltungsbaugruppe außer Betrieb genommen wird.

Der vorliegenden Erfindung liegt nun die Aufgabe zugrunde, einen Weg zu zeigen, wie bei einer Schaltungsanordnung der eingangs genannten Art mit einem relativ geringen schaltungstechnischen Aufwand in der Zentralsteuereinheit das Vorliegen von statischen und dynamischen Fehlern erkannt werden kann.

Gelöst wird die vorstehend aufgezeigte Aufgabe bei einer Schaltungsanordnung der eingangs genannten Art erfindungsgemäß dadurch, daß die Zentralsteuereinheit einen ersten, im fehlerfreien Zustand der Schaltungsbaugruppen aktivierten Unterbrechungseingang und einen gegenüber dem ersten Unterbrechungseingang eine höhere Unterbrechungspriorität aufweisenden zweiten Unterbrechungseingang, der im fehlerfreien Zustand der Schaltungsbaugruppen deaktiviert ist, aufweist, daß ein Register vorgesehen ist, in welches bei Ansteuerung der Schaltungsbaugruppen zum Zwecke der Abgabe von Datensignalen Angaben bezüglich der jeweils gerade angesteuerten Schaltungsbaugruppe einschreibbar sind, daß mindestens eine Fehlererkennungsschaltung vorgesehen ist, die bei Vorhandensein eines Fehlers in der jeweiligen Schaltungsbaugruppe auf deren Ansteuerung hin ein Fehlersignal abgibt, daß mit den Unterbrechungseingängen eine Steuereinrichtung verbunden ist, die auf ein solches Fehlersignal hin über den ersten Unterbrechungseingang den Ablauf einer ersten, der Feststellung des Vorliegens von dynamischen Fehlern dienenden Unterbrechungsroutine in der Zentralsteuereinheit bewirkt, in deren Verlauf der zweite Unterbrechungseingang aktiviert wird, und daß die Steuereinrichtung bei einem erneuten Auftreten eines Fehlersignals vor Beendigung der gerade ablaufenden Unterbrechungsroutine auf eine Ansteuerung der in dem Register bezeichneten Schaltungsbaugruppe hin über den nunmehr aktivierten zweiten, der Feststellung des Vorliegens von statischen Fehlern dienenden Unterbrechungseingang den Ablauf einer weiteren Unterbrechungsroutine bewirkt.

Die Erfindung bringt den Vorteil mit sich, daß ein Erkennen von statischen und dynamischen Fehlern mit einer lediglich geringen zusätzlichen dynamischen Belastung der Zentralsteuereinheit möglich ist.

Anhand von Zeichnungen wird die Erfindung nachstehend beispielsweise näher erläutert.

Fig. 1 zeigt in einem Blockschaltbild ausschnittweise ein Mikroprozessorsystem, bei dem die Erfindung angewandt ist,

Fig. 2 zeigt ein Diagramm, auf das im Zuge der Erläuterung der Erfindung eingegangen wird.

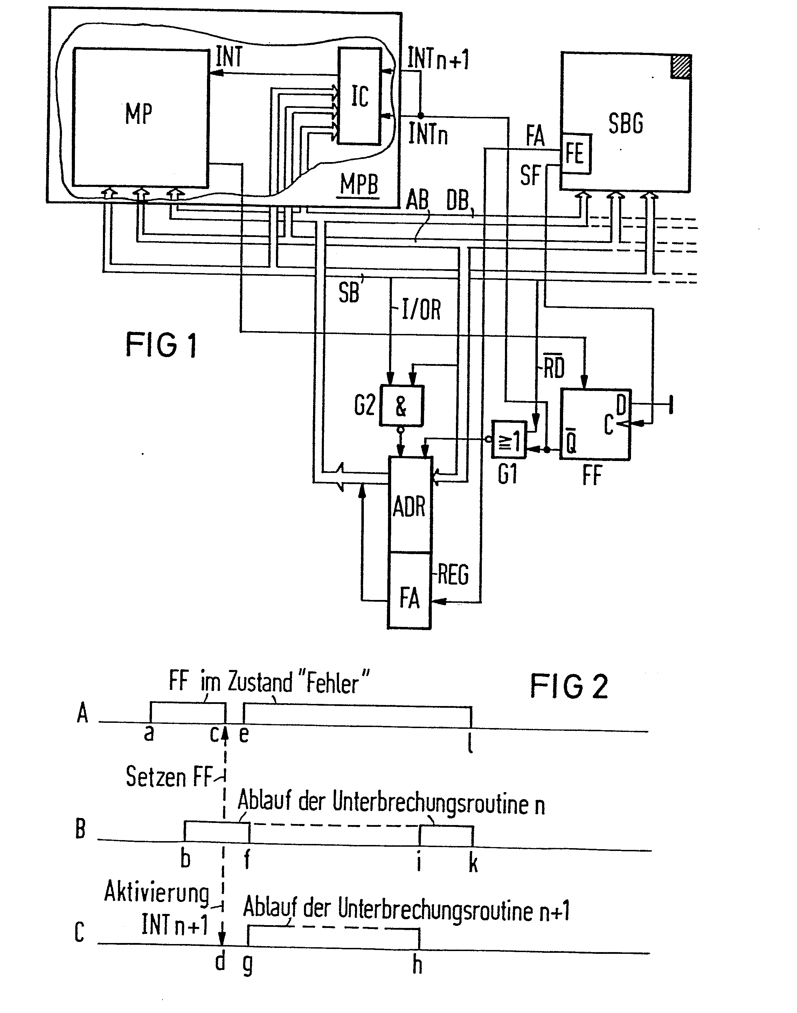

In Fig. 1 ist ausschnittweise ein Mikroprozessorsystem dargestellt. Dieses System weist eine Mikroprozessorbaugruppe MPB auf, von der lediglich ein Mikroprozessor MP und eine ihm zugehörige, mehrere Unterbrechungseingänge INTn, INTn+1 aufweisende Unterbrechungssteuerung IC dargestellt ist. Diese Unterbrechungssteuerung ist ausgangsseitig für die Abgabe eines Unterbrechungssignals, welches eine Unterbrechung eines von dem Mikroprozessor MP gesteuerten Ablaufes bewirkt, mit einem Unterbrechungssteuereingang INT des Mikroprozessors MP verbunden. Datenein-/ausgänge der Unterbrechungssteuerung IC sind an ein Datenbussystem DB angeschlossen, das für die Übertragung von Datensignalen von bzw. zu dem Mikroprozessor hin dient. Über dieses Datenbussystem werden einerseits zusammen mit einem Unterbrechungssignal zu dem Mikroprozessor hin Informa- tionssignale übertragen. Diese enthalten Angaben bezüglich der Höhe der Unterbrechungspriorität des gerade an einem der Unterbrechungseingänge auftretenden und an den Mikroprozessor weitergeleiteten Unterbrechungssignals. Andererseits können über dieses Datenbussystem, wie später noch erläutert werden wird, durch entsprechende Signale einzelne Unterbrechungseingänge der Unterbrechungssteuerung von dem Mikroprozessor her aktiviert bzw. deaktiviert werden.

Der Mikroprozessor MP und die Unterbrechungssteuerung IC sind zusätzlich mit einem für die Übertragung von Adressensignalen dienenden Adressenbussystem AB und mit einem Steuerbussystem SB verbunden, über das Steuersignale übertragen werden. Bei diesen Steuersignalen handelt es sich um Signale für die Steuerung der Kommunikation zwischen dem Mikroprozessor MP und den mit ihm verbundenen Einrichtungen des Mikroprozessorsystems. Solche Steuersignale sind z.B. Schreib- und Lesesignale für die Steuerung von Speicheranordnungen oder peripheren Einrichtungen. Von diesen zu dem Mikroprozessorsystem gehörenden Speicheranordnungen und peripheren Einrichtungen ist in Fig. 1 lediglich eine mit SBG bezeichnete Speicheranordnung dargestellt.

Die Speicheranordnung SBG, die an die oben angegebenen Bussysteme angeschlossen ist, weist bei dem hier beschriebenen Ausführungsbeispiel eine in Fig. 1 mit FE bezeichnete Fehlererkennungsschaltung auf, die bei Auslesen einer Speicherzelle deren Speicherinhalt auf einen vorhandenen Codierungsfehler überprüft und diesen gegebenenfalls korrigiert. Hierfür sind die innerhalb des Mikroprozessorsystems zu übertragenden Datensignale nach dem als Hamming-Code bekannten Code codiert. Dieser Code ermöglicht eine Korrektur von 1-Bit-Fehlern und ein Erkennen von 2-Bit-Fehlern. Bei Erkennen eines dieser Fehler gibt die Fehlererkennungsschaltung FE an einem Fehlerausgang SF ein entsprechendes Fehlersignal ab. Außerdem gibt sie noch an einem mit FA bezeichneten Ausgang ein Informationssignal ab, welches angibt, ob die als fehlerhaft erkannte Codierung korregiert werden konnte oder nicht.

Der gerade erwähnte Fehlerausgang SF der Speicheranordnung SBC ist mit dem Takteingang einer bistabilen Kippstufe FF verbunden. Bei dieser Kippstufe handelt es sich um eine sogenannte D-Kippstufe, deren D-Eingang mit Masse bzw. mit einem dem logischen 0-Pegel entsprechenden Potential verbunden ist und deren Ausgang $\bar{Q}$ von dem Mikroprozessor MP her in einen definierten Ausgangszustand setzbar ist. Der mit $\bar{Q}$ bezeichnete Ausgang ist dabei an die Unterbrechungseingänge INTn und INTn+1 der bereits oben erwähnten Unterbrechungssteuerung IC der Mikroprozessorbaugruppe MPB angeschlossen. Mit n bzw. n+1 soll dabei die Höhe der den Unterbrechungseingängen jeweils zugeordneten Unterbrechungspriorität angegeben werden, d.h. ein am Eingang n+1 anliegendes Unterbrechungssignal hat Vorrang gegenüber einem entsprechenden, am Einang n anliegenden Signal. Hier sei bereits darauf hingewiesen, daß im fehlerfreien Zustand des Mikroprozessorsystems lediglich der Unterbrechungseingang INTn aktiviert ist. Der Unterbrechungseingang INTn+1 ist zunächst deaktiviert. Wie bereits erwähnt, erfolgt die Aktivierung bzw. Deaktivierung der einzelnen Unterbrechungseingänge durch von dem Mikroprozessor her über das Datenbussystem DB übertragene Signale. Für die Übernahme dieser Signale wird die Unterbrechungssteuerung IC über das Adressenbussystem AB und das Steuerbussystem SB angesteuert.

Der mit $\bar{Q}$ bezeichnete Ausgang der Kippstufe FF ist außerdem mit einem Eingang eines NOR-Gliedes G1 verbunden. An einem weiteren Eingang erhält dieses NOR-Glied ein über das Steuerbussystem SB übertragenes Lesesignal $\overline{RD}$ zugeführt, mit dem eine Speicherzelle der Speicheranordnung SBG ausgelesen wird. Der Ausgang des NOR-Gliedes G1 ist an einem Freigabeeingang eines aus zwei getrennten Registerbereichen bestehenden Registers Reg angeschlossen. Ein erster, mit ADR bezeichneter Registerbereich dient für die Aufnahme einer über das Adressenbussystem AB übertragenen Adresse. Er enthält hierzu eine der Anzahl der zu einer Adresse gehörenden Adressenbits entsprechende Anzahl von Registerstellen. Ausgangsseitig gibt dieser Registerbereich auf eine entsprechende· Ansteuerung von dem Mikroprozessor MP her die in ihm gespeicherte Adresse an das Datenbussystem DB ab.

In einen zweiten, mit FA bezeichneten Registerbereich des Registers Reg wird das bei Erkennen eines Codierungsfehlers von dem Ausgang FA der Speicheranordnung SBG abgegebene Informationssignal übernommen. Dieses Informationssignal wird zusammen mit der in dem Registerbereich ADR gespeicherten Adresse bei einer entsprechenden Ansteuerung an das Datenbussystem DB abgegeben. Die gerade erwähnte Ansteuerung des Registers Reg für die Abgabe der in ihm gespeicherten Signale erfolgt mit Hilfe eines NAND-Gliedes G2. Dieses NAND-Glied erhält an einem seiner Eingänge von dem Mikroprozessor her über das Steuerbussystem SB ein Lesesignal I/OR zugeführt, mit dem eine Übergabe von in Ein-/Ausgabeeinrichtungen gespeicherten Signalen gesteuert wird. Ein weiterer Eingang des NAND-Gliedes G2 ist mit einer Adressenleitung des Adressenbussystems AB verbunden, über die für die Adressierung des Registers Reg als Ausgabeeinrichtung ein entsprechendes Adressensignal übertragen wird.

Nachdem zuvor der Aufbau der in Fig. 1 dargestellten Schaltungsanordnung erläutert worden ist, wird nunmehr unter Bezugnahme auf Fig. 2 die Arbeitsweise dieser Schaltungsanordnung beschrieben. Hierzu sei angenommen, daß das in Fig.1 dargestellte Mikroprozessorsystem sich zunächst in einem fehlerfreien Zustand befindet. In diesem Zustand ist die Kippstufe FF von dem Mikroprozessor her so gesetzt, daß sie an ihrem Q̄-Ausgang einen logischen O-Pegel abgibt. Der Unterbrechungseingang INTn+1 der Unterbrechungssteuerung IC ist, wie bereits erwähnt, im fehlerfreien Zustand deaktiviert.

Werden nun von dem Mikroprozessor MP her für das Auslesen von in den Speicherzellen der Speicheranordnung SBG gespeicherten Signalen Lesesignale R̄D abgegeben, so wird das Register Reg über das NOR-Glied G1 mit jedem Lesesignal für die Übernahme der zusammen mit dem jeweiligen Lesesignal über das Adressenbussystem AB übertragenen Adresse freigegeben. Mit jeder auf diese Weise übernommenen Adresse wird eine zuvor gespeicherte Adresse überschrieben. Wird bei dem Auslesen einer der Speicherinhalte durch die Fehlererkennungsschaltung FE ein Codierungsfehler erkannt und gegebenenfalls korrigiert, so gibt diese an ihrem Ausgang SF ein Fehlersignal und an ihrem Ausgang FA ein Informationssignal ab. Mit dem Informationssignal, das in den Registerbereich FA des Registers Reg übernommen wird, wird dem Mikroprozessor MP, wie bereits oben erwähnt, angezeigt,ob der Codierungsfehler korrigierbar war oder nicht. Durch das Auftreten eines Fehlersignals geht die Kippstufe FF in einen fehleranzeigenden Zustand über (a in·Fig. 2). Dieser Zustand ist durch einen logischen 1-Pegel am Ausgang Q̄ gekennzeichnet. Dieser logische Pegel bewirkt das Sperren des NOR-Gliedes G1, so daß die gerade in das Register Reg übernommene Adresse der den fehlerhaften Speicherinhalt aufweisenden Speicherzelle nicht durch weitere Adressen überschrieben werden kann.

In dem fehleranzeigenden Zustand liegt am Q̄-Ausgang der Kippstufe FF ein logischer 1-Pegel an. Dieser logische Pegel wird von der Unterbrechungssteuerung IC als Unterbrechungssignal interpretiert und an den Mikroprozessor MP weitergeleitet. Da hier zunächst der Unterbrechungseingang n+1 deaktiviert ist, wird zusätzlich zu diesem Unterbrechungssignal ein Informationssignal zu dem Mikroprozessor hin übertragen, das dem Unterbrechungssignal die Unterbrechungspriorität n zuweist. Aufgrund dieser Signale beendet der Mikroprozessor die gerade von ihm gesteuerten Abläufe und startet eine der Unterbrechungspriorität n entsprechende Unterbrechungsroutine (b in Fig. 2). Im Verlauf dieser Unterbrechungsroutine erfolgt eine Übernahme der in dem Register Reg gespeicherten Adresse und des in dem Registerbereich FA gespeicherten Informationssignals in den Mikroprozessor. Anschließend wird die Kippstufe FF wieder in ihre Ausgangsstellung gesetzt (c in Fig. 2). Außerdem wird der Unterbrechungseingang n+1 der Unterbrechungssteuerung IC nunmehr aktiviert (d in Fig. 2).

Nach der Übernahme der in dem Register Reg gespeicherten Adresse zusammen mit dem in dem Registerbereich FA gespeicherten Informationssignal wird von dem Mikroprozessor her die dieser Adresse entsprechende Speicherzelle erneut ausgelesen. Ergibt eine Überprüfung des Speicherinhaltes durch die Fehlererkennungsschaltung FE, daß wiederum ein Codierungsfehler vorliegt, so geht die Kippstufe FF erneut in ihren fehleranzeigenden Zustand über (e in Fig. 2). Die Unterbrechungssteuerung IC erkennt über den nunmehr aktivierten Unterbrechungseingang n+1 ein Unterbrechungssignal und leitet dieses unter Angabe der Unterbrechungspriorität n+1 an den Mikroprozessor weiter. Da dieses Unterbrechungssignal eine gegenüber dem Unterbrechungssigal, das die gerade ablaufende Unterbrechungsroutine ausgelöst hat, höhere Unterbrechungspriorität aufweist, wird die gerade ablaufende Unterbrechungsroutine unterbrochen (f in Fig. 2) und eine der Unterbrechungspriorität n+1 entsprechende Unterbrechungsroutine gestartet (g in Fig. 2). Nach Ablauf der Unterbrechungsroutine n+1 (h in Fig. 2) wird die zunächst unterbrochene Unterbrechungsroutine n fortgesetzt (i bis k in Fig. 2). Vor Beendigung dieser Unterbrechungsroutine wird die Kippstufe FF wieder in ihre Ausgangsstellung gesetzt, um gegebenenfalls weitere Fehler in der Speicheranordnung SBG zu erkennen (l in Fig. 2).

Durch den gerade erläuterten verschachtelten Ablauf der Unterbrechungsroutinen n und n+1 ist es möglich, in der Speicheranordnung SBG über eine vorgegebene erste Zeitspanne hinweg vorliegende statische bzw. eine vorgebene zweite Zeitspanne nicht überschreitende dynamische Fehler festzustellen. Durch den Ablauf der Unterbrechungsroutine n ohne Unterbrechung aufgrund eines Unterbrechungssignals mit der Unterbrechungspriorität n+1 werden die bei Auftreten von dynamischen Fehlern erforderlichen Maßnahmen gesteuert. Tritt dagegen eine Unterbrechung der Unterbrechungsroutine n auf, wie es der Fall bei einem statischen Fehler ist, so werden durch die Unterbrechungsroutine n+1 die bei Auftreten von statischen Fehlern erforderlichen Maßnahmen gesteuert.

Bisher wurde lediglich der Fall betrachtet, daß durch den Ablauf der beiden Unterbrechungsroutinen in der Mikroprozessorbaugruppe MPB in der Speicheranordnung SBG auftretende statische bzw. dynamische Fehler festgestellt werden. Die Schaltungsanordnung gemäß der vorliegenden Erfindung läßt sich jedoch nicht nur für die Feststellung derartiger in Speicheranordnungen auftretender Fehler verwenden. Vielmehr kann damit das Vorliegen von statischen und dynamischen Fehlern in beliebigen Schaltungsbaugruppen festgestellt werden, die über die genannten Bussysteme AB, DB und SB mit der Mikroprozessorbaugruppe MPB verbunden sind und über diese von der Mikroprozessorbaugruppe her für die Abgabe von Datensignalen ansteuerbar sind.

Sind mehrere derartige Schaltungsbaugruppen über die Bussysteme mit der Mikroprozessorbaugruppe MPB verbunden, so kann jede der Schaltungsbaugruppen eine eigene Fehlererkennungsschaltung FE aufweisen. In diesem Fall sind die in Fig. 1 dargestellten Ausgänge der einzelnen Fehlererkennungsschaltungen mit jeweils einem ODER-Glied zu verbinden, dessen Ausgang an die Kippstufe FF bzw. an den Registerbereich FA des Registers Reg angeschlossen ist.

Für den Fall, daß mehrere Schaltungsbaugruppen über die genannten Bussysteme mit der Mikroprozessorbaugruppe MPB verbunden sind, kann auch anstelle einer der Anzahl der Schaltungsbaugruppen entsprechenden Anzahl von Fehlererkennungsschaltungen eine einzige gemeinsame Fehlererkennungsschaltung vorgesehen sein, die zentral in der Mikroprozessorbaugruppe angeordnet ist.

1 Patentanspruch
2 Figuren

Patentanspruch

Schaltungsanordnung zum Erkennen von in Schaltungsbaugruppen (SBG) auftretenden und von diesen durch Abgabe jeweils eines Fehlersignals angezeigten, über eine vorgegebene erste Zeitspanne hinweg vorliegenden statischen Fehlern bzw. eine vorgegebene zweite Zeitspanne nicht überschreitenden dynamischen Fehlern in einer mit diesen Schaltungsbaugruppen verbundenen und diese für eine Abgabe von Datensignalen ansteuernden Zentralsteuereinheit (MPB), insbesondere in einer Mikroprozessorbaugruppe, d a d u r c h   g e - k e n n z e i c h n e t , daß die Zentralsteuereinheit (MPB) einen ersten, im fehlerfreien Zustand der Schaltungsbaugruppen aktivierten Unterbrechungseingang (INTn) und einen gegenüber dem ersten Unterbrechungseingang eine höhere Unterbrechungspriorität aufweisenden zweiten Unterbrechungseingang (INTn+1), der im fehlerfreien Zustand der Schaltungsbaugruppen deaktiviert ist, aufweist,

daß ein Register (Reg) vorgesehen ist, in welches bei Ansteuerung der Schaltungsbaugruppen zum Zwecke der Abgabe von Datensignalen Angaben bezüglich der jeweils gerade angesteuerten Schaltungsbaugruppe einschreibbar sind, daß mindestens eine Fehlererkennungsschaltung (FE) vorgesehen ist, die bei Vorhandensein eines Fehlers in der jeweiligen Schaltungsbaugruppe auf deren Ansteuerung hin ein Fehlersignal abgibt,

daß mit den Unterbrechungseingängen (INTn, INTn+1) eine Steuereinrichtung (FF) verbunden ist, die auf ein solches Fehlersignal hin über den ersten Unterbrechungseingang (INTn) den Ablauf einer ersten, der Feststellung des Vorliegens von dynamischen Fehlern dienenden Unterbrechungsroutine in der Zentralsteuereinheit bewirkt, in deren Verlauf der zweite Unterbrechungseingang (INTn+1) aktiviert wird,

und daß die Steuereinrichtung bei einem erneuten Auftreten eines Fehlersignals vor Beendigung der gerade ablaufenden Unterbrechungsroutine auf eine Ansteuerung der in dem Register bezeichneten Schaltungsbaugruppe hin über den nunmehr aktivierten zweiten, der Feststellung des Vorliegens von statischen Fehlern dienenden Unterbrechungseingang den Ablauf einer weiteren Unterbrechungsroutine bewirkt.

0141161

1/1

FIG 1

FIG 2

FF im Zustand "Fehler"

A    a    c↑e    l

Setzen FF

Ablauf der Unterbrechungsroutine n

B    b    f    i    k

Aktivierung
INT n+1

Ablauf der Unterbrechungsroutine n+1

C    d g    h